# EUROPEAN PATENT SPECIFICATION

(11) **EP 3 469 414 B1**
(45) Date of publication and mention of the grant of the patent: **05.08.2020**
(21) Application number: 17729561.5
(22) Date of filing: 24.05.2017
(51) Int. Cl.: G02B 27/01

(54) **IMAGE DISPLAY APPARATUS**
BILDANZEIGEVORRICHTUNG
APPAREIL D'AFFICHAGE D'IMAGES

(30) Priority: 10.06.2016 JP 2016116142
(43) Date of publication of application: 17.04.2019
(73) Proprietor: Ricoh Company, Ltd., Tokyo 143-8555 (JP)
(72) Inventor: YOSHIMURA, Kenichi, Yokohama-shi Kanagawa 222-8530 (JP); KUSUNOSE, Noboru, Tokyo 143-8555 (JP)
(74) Representative: J A Kemp LLP
(86) International application number: PCT/JP2017/019432
(87) International publication number: WO 2017/212924

(56) References cited:
- WO-A1-2014/148167
- CN-U- 204 527 653
- FR-A1- 2 858 068
- JP-A- 2012 032 513
- JP-A- 2014 043 205
- US-A1- 2016 116 735

## Description

### Technical Field

The present invention relates to an image display apparatus.

### Background Art

A vehicle head-up display (HuD) is known as an application that allows a driver of a vehicle to recognize an alarm or information with small movement of line of sight. Examples of the HuD includes a HuD of "panel type" that draws an intermediate image using an imaging device, such as a liquid crystal device or a digital micromirror device (DMD), and a HuD of "laser scan type" that scans a laser beam emitted by a laser diode using a two-dimensional scanning device to form an intermediate image.

From a manufacturing issue, a microlens array or the like, on which a two-dimensional image (intermediate image) is to be drawn, of an HuD has conventionally been manufactured into a flat screen shape. When a flat screen is used in an HuD, variation undesirably arises in the length of optical path of light exiting from the flat screen and incident on a concave mirror. As a result, field curvature increases.

On the other hand, when the microlens array is formed into a curved screen shape, the variation in the optical path length of light incident on the concave mirror decreases. Consequently, reduction of field curvature can be achieved. Although molding into a curved screen shape had formerly been difficult, molding into a shape curved in the longitudinal direction has become possible.

Patent literature 1 discloses a vehicle projection display apparatus in which a flexible display device is held and fixed in a curved position so as to correct field curvature of a virtual image caused by a concave mirror or a curved surface of a windshield and another optical correction member is arranged in front of the curved display device in an optical path. US 2016/116735 A1, FR 2 858 068 A1, WO 2014/148167 A1, CN 204 527 653 U, JP 2014 043205 A and JP 2012 032513 A disclose background art to the present invention.

### [Summary of Invention]

### [Technical Problem]

However, forming a to-be-scanned surface which may be a microlens array for example, into a desired curved shape has been difficult. A flexible display device has a disadvantage that if the display device is fixed to a holder using filler, peel-off or deformation can occur and cause an image defect when a change occurs in an operating environment.

The present invention has been made in view of the above, and the present invention has an object to provide an image display apparatus capable of holding a to-be-scanned member on which an image is to be drawn with laser light, such that the to-be-scanned member curves with a predetermined curvature.

### [Solution to Problem]

In order to solve the above problem and achieve the object, there is provided an image display apparatus as defined by the claims.

### [Advantageous Effects of Invention]

According to an aspect of the present invention, it is possible to hold a to-be-scanned member on which an image is to be drawn with laser light, such that the to-be-scanned member curves with a predetermined curvature.

### [Brief Description of Drawings]

[Fig. 1]

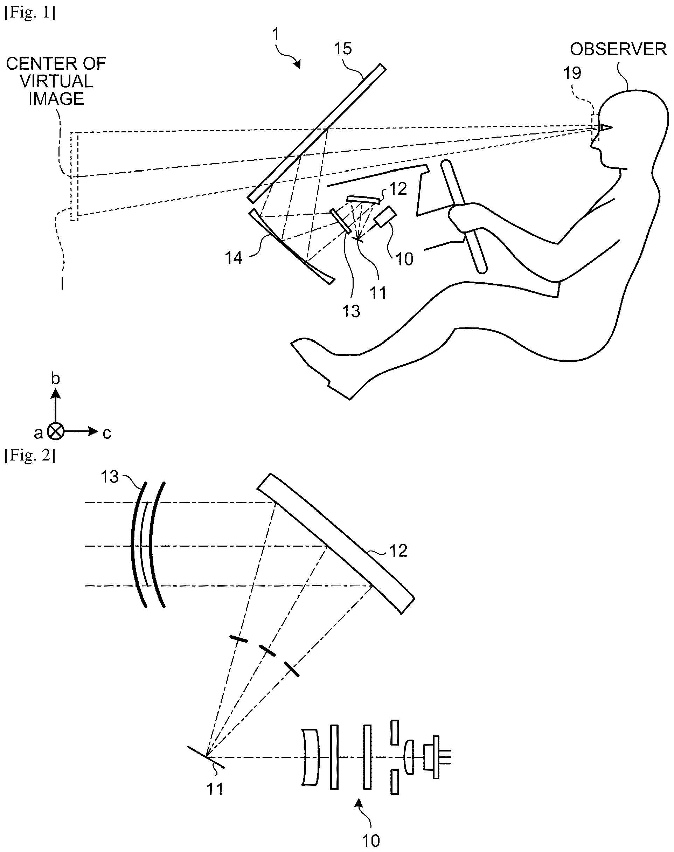

   Fig. 1 is a diagram illustrating an overview of an image display apparatus according to an embodiment.
[Fig. 2]
   Fig. 2 is a diagram illustrating an imager (image forming unit) in detail.
[Fig. 3]

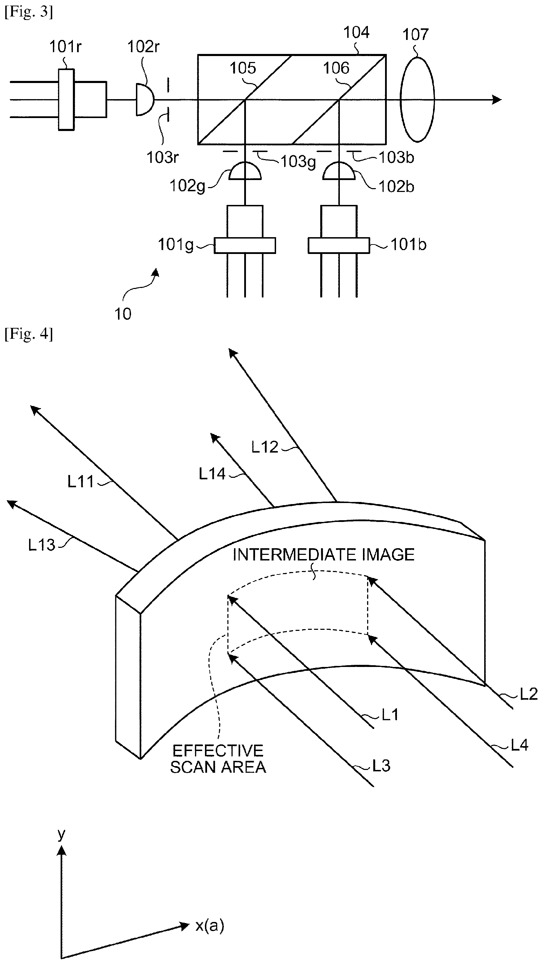

   Fig. 3 is a diagram illustrating a configuration of a light source unit.
[Fig. 4]
   Fig. 4 is a diagram illustrating a screen and directions of light beams.
[Fig. 5A]
   Fig. 5A is a diagram illustrating a first example of the screen and the surroundings .
[fig.5B]Fig. 5B is a diagram illustrating the first example of the screen and the surroundings.
[fig.6A]Fig. 6A is a diagram illustrating a second example of a screen and the surroundings.
[fig.6B]Fig. 6B is a diagram illustrating the second example of the screen and the surroundings.
[fig.7]Fig. 7 is a cross-sectional view, taken along line Z, illustrating the curved screen of the second example illustrated in Fig. 6A and Fig. 6B housed in housing space.
[fig.8]Fig. 8 is a diagram illustrating a third example of the screen and the surroundings.
[fig.9]Fig. 9 is a diagram illustrating sizes and a layout of the curved screen and a second holder in relation to each other.
[fig. 10A]Fig. 10A is a diagram illustrating a fourth example of the screen and the surroundings.
[fig.10B]Fig. 10B is a diagram illustrating the fourth example of the screen and the surroundings.
[fig.10C]Fig. 10C is a diagram illustrating the fourth example of the screen and the surroundings.

### Description of Embodiments

Embodiments of an image display apparatus are described below with reference to the accompanying drawings. Fig. 1 is a diagram illustrating an overview of an image display apparatus 1 according to an embodiment. The image display apparatus 1, which may be a head-up display (HuD) for example, is mounted on a mobile entity, such as a vehicle, aircraft, or ship.

The image display apparatus 1 includes a light source unit (laser light source) 10, an optical deflector 11, a scanning mirror 12, a screen (to-be-scanned member) 13, a concave mirror 14, and a transparent reflective member 15. The transparent reflective member 15, which may be a front windshield of a vehicle for example, is irradiated with light, thereby enabling an observer to view a virtual image from the observer's eye point. The image display apparatus 1 makes navigation information (e.g., information about a velocity and traveled distance) necessary for driving a vehicle, visible via a front windshield (the transparent reflective member 15) of the vehicle, for example. In this case, the front windshield transmits a part of incident light and reflects at least a part of the remainder. The case in which the image display apparatus 1 is mounted on a vehicle (automobile) including a front windshield is described below as an example.

The light source unit 10 combines laser light for an image of three colors (R, G, and B) and emits the combined laser light. The combined laser light of the three colors is guided toward a reflecting surface of the optical deflector 11. The optical deflector 11, which is a micro electro mechanical systems (MEMS) fabricated by, for example, a semiconductor process as will be described later, includes a single micromirror that pivots on two perpendicular axes. The optical deflector 11 may alternatively be a mirror system including two mirrors, each of which pivots or rotates on a single axis. The optical deflector 11 deflects light beams of the combined laser light of the three colors emitted by the light source unit 10. The combined laser light deflected by the optical deflector 11 is reflected from the scanning mirror 12 to draw a two-dimensional image (intermediate image) on the screen 13.

The screen 13 has a function of making laser light diverge at a predetermined angle of divergence and has structure of a microlens array, for example, as will be described later. The screen 13 in this example is formed as a curved screen (curved structure). The light beams exiting from the screen 13 form a virtual image enlarged and displayed by the single concave mirror 14 and the transparent reflective member 15. That is, the image display apparatus 1 includes an enlarging optical system that enlarges an image area on the screen 13 scanned using the optical deflector 11. The part including the light source unit 10, the optical deflector 11, the scanning mirror 12, and the screen 13 may be referred to as an imager (image forming unit).

The concave mirror 14 is designed and arranged so as to cancel an optical distortion factor that is caused by the transparent reflective member 15 and causes horizontal lines of the intermediate image to be convex upward or downward. The image display apparatus 1 may alternatively be configured to include, separately, a partial-reflecting mirror (combiner) having the same function (partial reflection) as the transparent reflective member 15.

An observer (e.g., an operator who operates the mobile entity) views an enlarged virtual image I from an eye box 19 (which is an area near eyes of the observer) in the optical path of the laser light reflected from the transparent reflective member 15. The eye box 19 denotes a range where the enlarged virtual image I is visible without adjusting an eye point position. Specifically, the eye box 19 is equal to or smaller than the eye range of drivers for automobiles (JIS D0021). The reflected light enables the observer to view the enlarged virtual image I.

The imager (image forming unit) is described in detail below with reference to Fig. 2 and Fig. 3. Fig. 2 is a diagram illustrating the imager (image forming unit) in detail. Fig. 3 is a diagram illustrating a configuration of the light source unit 10. The light source unit 10 emits a pixel displaying beam LC for displaying a color image. The pixel displaying beam LC is a single beam, into which beams of three colors, red (hereinafter, "R"), green (hereinafter, "G"), and blue (hereinafter, "B"), are combined.

As illustrated in Fig. 3, the light source unit 10 includes, for example, a laser diode 101r that emits R laser light, a laser diode (semiconductor laser) 101g that emits G laser light, and a laser diode 101b that emits B laser light.

Coupling lenses 102r, 102g, and 102b reduce divergence of the laser light emitted by the laser diodes 101r, 101g, and 101b. After the divergence is reduced by the coupling lenses 102r, 102g, and 102b, the laser light beams of the respective colors are shaped (i.e., the diameters of the light beams are limited) by apertures 103r, 103g, and 103b.

The shaped laser light beams of the respective colors enter a beam combining prism (optical-path coupling member) 104. The beam combining prism 104 includes a dichroic film 105 that transmits R light and reflects G light and a dichroic film 106 that transmits R light and G light and reflects B light. Hence, the laser light beams of the colors R, G, and B are combined into a single light beam in the beam combining prism 104 and exit as the single light beam. The exiting laser light beam is converted into a "parallel beam" having a predetermined light beam diameter by a lens 107. This "parallel beam" is the pixel displaying beam LC.

The laser light beams of the colors R, G, and B, which are components of the pixel displaying beam LC, are intensity-modulated in accordance with image signals (i.e., in accordance with image data) representing a "two-dimensional color image" to be displayed. The intensity modulation may be performed using either a direct modulation method that directly modulates the semiconductor lasers or an external modulation method that modulates laser light beams emitted from the laser diodes. Light emission intensities of the laser diodes 101r, 101g, and 101b are modulated in accordance with image signals for the respective color components R, G, and B.

As illustrated in Fig. 2, the pixel displaying beam LC emitted from the light source unit 10 impinges on the optical deflector 11, where the pixel displaying beam LC is deflected two-dimensionally. The optical deflector 11 is, for example, a micromirror configured to pivot on pivot axes, which are "two axes that are perpendicular to each other". More specifically, the optical deflector 11 is a two-dimensional scanner including a MEMS mirror manufactured as a pivotable micromirror device through a semiconductor process, for example.

The optical deflector 11 is not limited to this example, and alternatively may be two micromirrors (e.g., MEMS mirrors or galvanometer mirrors), each pivots on a single axis, combined such that the two micromirrors pivot in directions perpendicular to each other. The two-dimensionally-deflected pixel displaying beam LC impinges on the scanning mirror 12, from which the pixel displaying beam LC is reflected toward the screen 13.

As illustrated in Fig. 4, the screen 13, which is a rectangular-plate-like member whose longitudinal direction extends in the a-direction, is curved with a predetermined curvature in the longitudinal direction (the a-direction). The screen 13 is of "transmission type". The screen 13 will be described in detail later.

The scanning mirror 12 is designed so as to correct scan-line (scan-trajectory) bowing that occurs on the screen 13. The pixel displaying beam LC reflected from the scanning mirror 12 is deflected by the optical deflector 11 to impinge on and move translationally on the screen 13, thereby two-dimensionally scanning the screen 13. In other words, the screen 13 is two-dimensionally scanned (e.g., raster scan) with the pixel displaying beam LC in the main-scanning direction and the sub-scanning direction. This two-dimensional scan forms a "color image" as an intermediate image on the screen 13.

In this example, an effective scan area (which is also referred to as effective image area) having the shape into which the rectangle of the screen 13 is curved in the longitudinal direction undergoes two-dimensional scanning, whereby an intermediate image is formed on the effective scan area (see Fig. 4). Of course, at each instant, "only a pixel irradiated with the pixel displaying beam LC at the instant" is displayed on the screen 13.

A two-dimensional color image is formed as a "group of pixels each displayed at a corresponding instant" by the two-dimensional scanning with the pixel displaying beam LC. A "color image" is formed on the screen 13. The pixel displaying beam LC, with which the color image is formed, or, in other words, the light transmitted through the screen 13, impinges on the concave mirror 14 and is reflected therefrom.

The concave mirror 14 constitutes a "virtual-image-forming optical system". The concave mirror 14 is designed and arranged to correct two-dimensional distortion which is caused by the transparent reflective member 15 inclined in relation to the horizontal plane and curved, and with which horizontal lines (side-to-side lines) of the virtual image is convex vertically, and two-dimensional distortion with which vertical lines (up-and-down lines) of the virtual image is convex horizontally.

The "virtual-image-forming optical system" forms the enlarged virtual image I of the "color image". Hereinafter, the enlarged virtual image I may be also simply referred to as "the virtual image". The a-direction indicated in Fig. 4 is the left-right direction for the observer. This direction may be also referred to as "side-to-side direction". The direction perpendicular to the side-to-side direction (the a-direction) may be also referred to as the "up-and-down direction". When taken as a whole, the screen 13 has a curved structure convex to the concave mirror 14. In this example, the screen 13 is curved with a predetermined curvature only in the a-direction (the X-direction) or, in other words, the side-to-side direction.

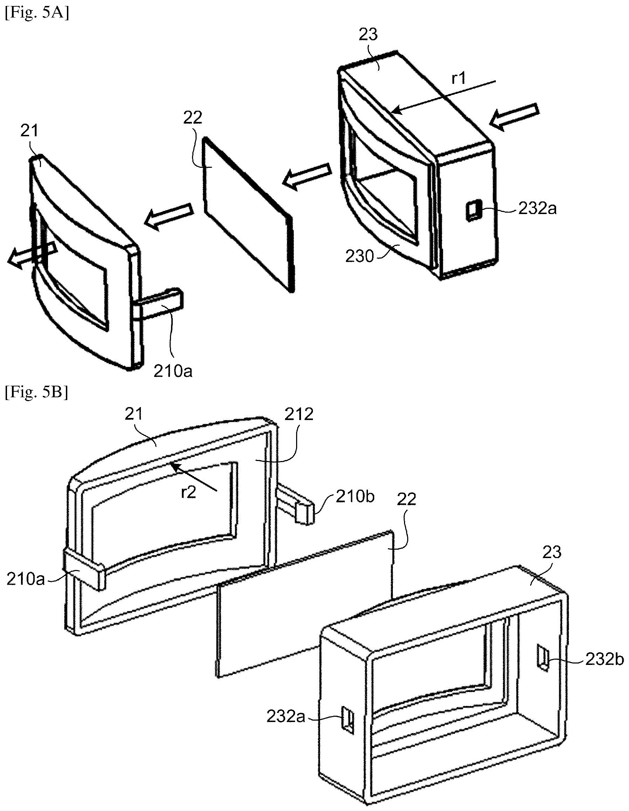

A structure for holding the screen 13 while curving the screen 13 with the predetermined curvature is described below. Fig. 5A and Fig. 5B are diagrams illustrating a first example of the screen 13 and the surroundings. In the first example, the screen 13 is structured such that a plane screen 22 is held and curved with a predetermined curvature by a first holder (holder) 21 and a second holder (holder) 23.

The plane screen 22 is a flat-plate-like microlens array shaped into a thin sheet. The plane screen 22 is housed in housing space formed when the first holder 21 and the second holder 23 are joined together, is pinched between the first holder 21 and the second holder 23, and is thereby held while being curved with the predetermined curvature.

When pinched in a housing including the first holder 21 and the second holder 23, the plane screen 22, which is a flat plate having no curvature prior to being held, is brought into contact with each of a reference surface 212 of the first holder 21 and a reference surface 230 of the second holder 23.

Each of the reference surface 230 and the reference surface 212 has a curvature only in the X-direction. The curvatures are set such that r2>r1 holds, where r1 is the curvature of the reference surface 230 and r2 is the curvature of the reference surface 212. The space defined by the reference surface 230 and the reference surface 212 is the housing space for housing the plane screen 22 and is desirably uniform across the entire range in the X-direction of the reference surface 230 and the reference surface 212. The housing space desirably has a width (clearance) that is substantially uniform at least at and near a contact position between the plane screen 22, and the reference surface 230 or the reference surface 212.

The housing space is defined by the reference surface 230 and the reference surface 212 such that the housing space has a sufficient clearance in each of the X-direction and the Y-direction but has substantially no clearance in the optical axis direction. The first holder 21 and the second holder 23 are made of a material having higher rigidity than the plane screen 22 so that the first holder 21 and the second holder 23 can overcome a restoring (i.e., reforming to the original flat-plate shape) force of the plane screen 22. It is preferable that the first holder 21 and the second holder 23 are made of a black material and have a matte-finished surface property to make light reflection or diffusion by the first holder 21 and the second holder 23 less likely to occur.

The first holder 21 includes resin hooks 210a and 210b projecting from side surfaces of the first holder 21. The resin hooks 210a and 210b are caught in hole portions 232a and 232b in the second holder 23, thereby the first holder 21 and the second holder 23 are integrated together, and simultaneously the plane screen 22 is pressed and fixed.

While the relatively large clearance is provided in each of the X-direction and the Y-direction, substantially no clearance is left in the thickness direction of the plane screen 22. Accordingly, the plane screen 22 hardly moves but a margin that allows the plane screen 22 to expand (be elongated) in response to an environmental change is provided. Hence, an undesirable phenomenon, such as deformation or swell, can be prevented. Although the example where fastening is achieved using the resin hooks 210a and 210b has been described above, alternatively, the first holder 21 and the second holder 23 may be fixed using another means, such as screw fixation, a bonding material, or an adhesive.

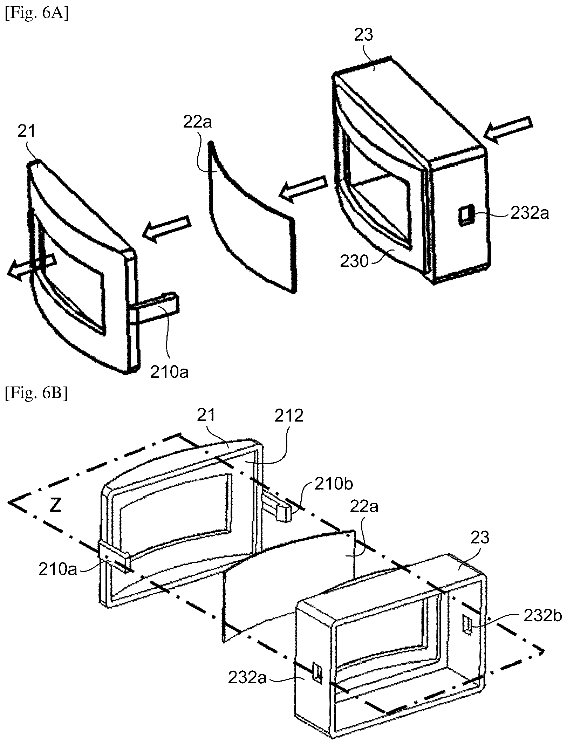

Fig. 6A and Fig. 6B are diagrams illustrating a second example of the screen 13 and the surroundings. In the second example, the screen 13 is structured such that a curved screen 22a is held while being curved with a predetermined curvature by the first holder 21 and the second holder 23. The curved screen 22a is manufactured by, for example, injection molding or casting.

Such a molded article needs to have a certain thickness (approximately 0.5 mm or more) due to problems regarding fluidity of a resin and/or the like. Although a flat-plate-like member can be molded relatively easily, it is difficult to manufacture a curved member that achieves a desired curvature with high accuracy. The curved screen 22a has a long side having a length of 100 mm or shorter and a short side having a length of 50 mm or shorter, for example. Bending in the longitudinal, X-direction can be performed relatively easily; however, when bent in the short, Y-direction, the bent amount may exceed elasticity limit and, in that case, cracking, tipping, or breakage is likely to occur.

Therefore, the curved screen 22a is molded into a curved shape close to a desired shape so that the long side can be deformed within the elastic deformation range but the short side will not be deformed. As in the first example, the ideal shape of the curved screen 22a is such that the reference surface 230 forms an incident surface (front side) and the reference surface 212 forms an emitting surface (back side).

The curved screen 22a is arranged between the first holder 21 and the second holder 23. The resin hooks 210a and 210b are caught in the hole portions 232a and 232b, causing the curved screen 22a to be pressed to conform to the reference surface 230 and the reference surface 212.

The first holder 21 and the second holder 23 have higher rigidity than the curved screen 22a, and hence the reference surface 230 and the reference surface 212 are not deformed when pressing. With the resin hooks 210a and 210b fitted in the hole portions 232a and 232b, the curved screen 22a is supported and fixed. As in the first example, housing space is defined by the first holder 21 and the second holder 23 such that the housing space has a clearance from the curved screen 22a in each of the X-direction and the Y-direction but has substantially no clearance in the optical axis direction.

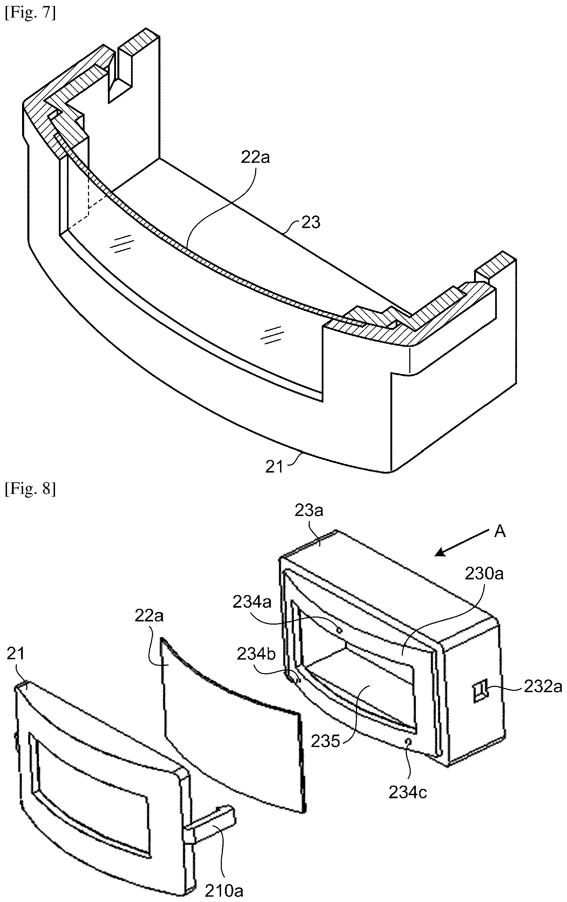

Fig. 7 is a cross-sectional view, taken along line Z, illustrating the curved screen 22a of the second example illustrated in Fig. 6A and Fig. 6B housed in the housing space. The curved screen 22a is pressed to be deformed and supported by the first holder 21 and the second holder 23. The second holder 23 is fixed to a light-source-unit casing or a main-body casing, for example.

Fig. 8 is a diagram illustrating a third example of the screen 13 and the surroundings. In the third example, the screen 13 is structured such that the curved screen 22a is held and curved with a predetermined curvature by the first holder 21 and a second holder 23a.

The second holder 23a includes projections (contact portions) 234a to 234c on the periphery of an opening 235 in a reference surface 230a such that the projections 234a to 234c are in contact with the curved screen 22a. Although the number of the projections (234a to 234c) is three in this example, the number may be any number. Heights of the projections 234a to 234c are set such that the curved screen 22a conforms to the reference surface 212 of the first holder 21. The reference surface 230a may be of low accuracy but is configured such that the curved screen 22a separates (the shape of the curved screen 22a cannot change) largely. Further, the projections 234a to 234c may be provided on the first holder 21.

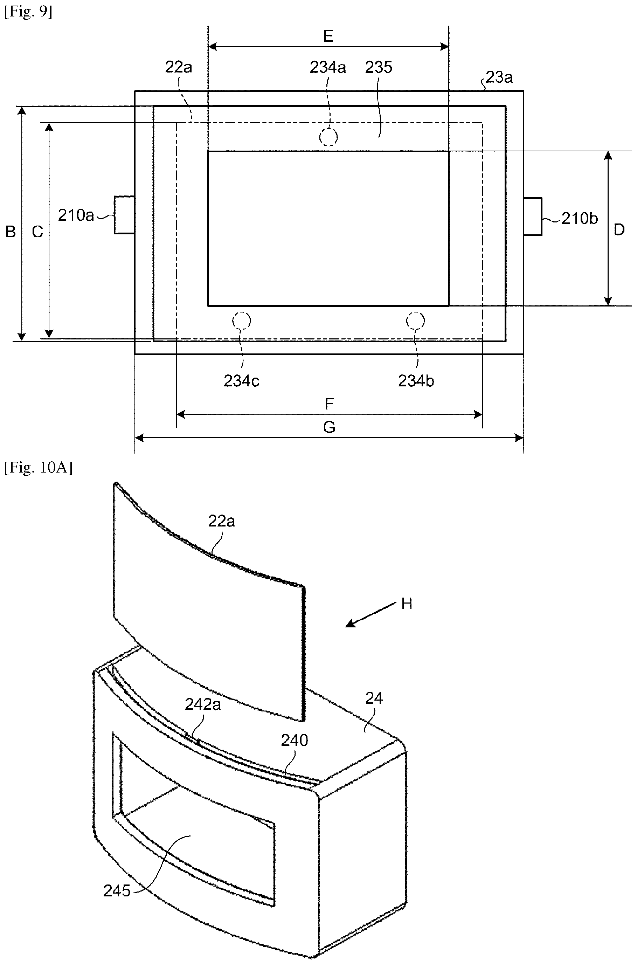

Fig. 9 is a diagram illustrating sizes and a layout of the curved screen 22a and the second holder 23a in relation to each other. Fig. 9 illustrates the second holder 23a and the like viewed along the A-direction indicated in Fig. 8. The curved screen 22a and the second holder 23a are configured such that F>E holds, where E is the length in the X-direction of the opening 235 in the second holder 23a and F is the dimension in the X-direction of the curved screen 22a that is pressed and conforms to the reference surface 212, so that laser beams are surely transmitted through the curved screen 22a, and such that G>F holds, where G is the dimension in the X-direction of the reference surface 212 of the first holder 21, so that the curved screen 22a is accommodated in the first holder 21 even when the curved screen 22a is elongated in the X-direction by thermal expansion.

Similarly, the curved screen 22a and the second holder 23a are configured such that C>D holds, where D is the length in the Y-direction of the opening 235 in the second holder 23a and C is the dimension in the Y-direction of the curved screen 22a that is pressed and conforms to the reference surface 212, so that laser beams are surely transmitted through the curved screen 22a, and such that B>C holds, where B is the dimension in the Y-direction of the reference surface 212 of the first holder 21, so that the curved screen 22a is accommodated in the first holder 21 even when the curved screen 22a is elongated in the Y-direction by thermal expansion.

The projections 234a to 234c are located such that the projection 234a is substantially equidistant in the X-direction from the projection 234b and the projection 234c so that the curved screen 22a is pressed equally on the left and right. As for the Y-direction, the projections 234a to 234c are located outside the opening 235 but inside the outer contour of the curved screen 22a. According to this layout, even when the curved screen 22a is elongated in response to an environmental change, the elongation can be absorbed while supporting the curved screen 22a between the first holder 21 and the second holder 23a and consequently an adverse effect on an image is prevented.

Figs. 10A to 10B are diagrams illustrating a fourth example of the screen 13 and the surroundings. In the fourth example, the screen 13 is structured such that the curved screen 22a is housed in housing space 240 formed in a holding member (housing) 24, to be held and curved with a predetermined curvature.

Referring to Fig. 10A, the housing space (slit) 240 is provided to allow insertion of the curved screen 22a into the holding member 24 in the lateral direction (the Y-direction). The opening width of the housing space 240 is larger than the thickness of the curved screen 22a. A clearance that is substantially equal to the thickness of the curved screen 22a is provided only by a projection 242a.

Surfaces where the holding member 24 and the curved screen 22a contact are shaped to substantially conform to an ideal shape of the curved screen 22a. Although the projections 242a is at one position in this example, alternatively, the projection 242a may be provided at a plurality of positions in a case where the plane screen 22 or the curved screen 22a does not conform to the reference surface. The curved screen 22a that is curved in relation to the holding member 24 is inserted.

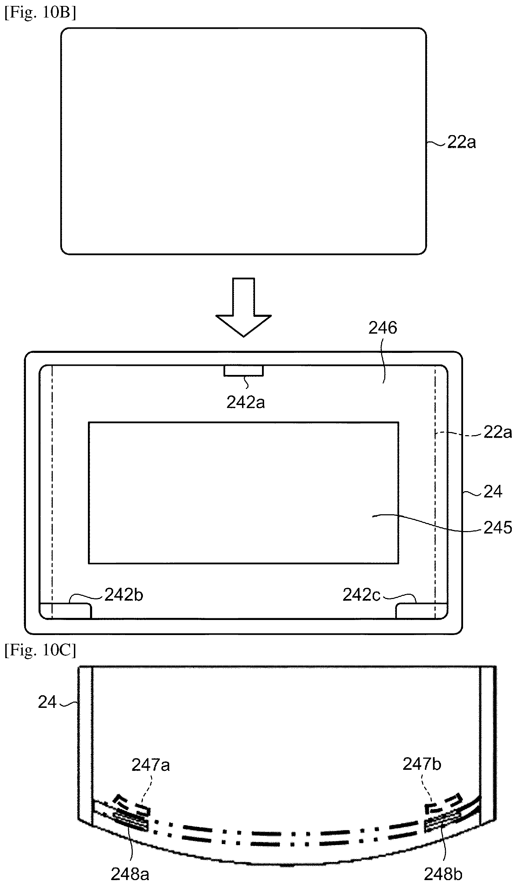

Fig. 10B is a diagram illustrating the curved screen 22a being inserted into the holding member 24 viewed along the H-direction of Fig. 10A. Referring to Fig. 10B, clearances between a reference surface 246, and the projection 242a and projections 242b and 242c are adjusted so that the curved screen 22a is pressed against the reference surface 246 by the projections 242a to 242c. When the reference surface 246 is molded to have an ideal curved surface for the irradiated surface of the curved screen 22a, the curved screen 22a conforming to the reference surface 246 approaches the ideal shape. In a case where the pressing force is insufficient, the number of the projections 242 may be increased to apply a pressure at a plurality of points.

Fig. 10C is a plan view of the holding member 24 as viewed from the bottom surface (the surface opposite from an insertion opening of the housing space 240). Openings are provided in the surface facing an insertion surface at, for example, a plurality of positions. For example, openings 248a and 248b are provided at positions corresponding to projections 247a and 247b. A molding die is inserted into the openings 248a and 248b to adjust a clearance created by the reference surface 246 and the projections 247a and 247b so that an appropriate pressing force is applied to the curved screen 22a. Consequently, the molding die can be simplified in structure, which leads to an increase in yield rate. The curved screen 22a is supported in a fashion there the curved screen 22a is pinched between the reference surface 246, and the projections 247a and 247b and the like, to conform to the reference surface 246. If it is desired to avoid entry of dust through the openings 248a and 248b and the like, sealing with sealing members may be used.

### Reference Signs List

1 Image display apparatus
10 Light source unit
11 Optical deflector
12 Scanning mirror
13 Screen
14 Concave mirror
15 Transparent reflective member
21 First holder
22 Plane screen
22 Curved screen
23, 23a Second holder
24 Holding member
212 Reference surface
230, 230a Reference surface
234a to 234c Projections
240 Housing space

### Citation List

### Patent Literature

PTL 1: Japanese Laid-open Patent Publication No. 2015-230329

## Claims

1. An image display apparatus (1) comprising:
a laser light source (10) configured to emit laser light in accordance with an image;
an optical deflector (11) configured to deflect the laser light emitted by the laser light source (10);
a screen (13) configured to make an intermediate image diverge at a predetermined angle of divergence, to cause the intermediate image to be reflected by a concave mirror (14) and a curved transparent reflective member (15) to form a virtual image, the intermediate image being drawn on the screen (13) with the laser light deflected by the optical deflector (11); and **characterized by**
a housing forming a curved housing space for housing the screen (13), wherein
the housing houses the screen (13) in the housing space to curve the screen (13) with a predetermined curvature.

2. The image display apparatus (1) according to claim 1, wherein the housing includes:
a first holder (21) configured to hold the screen (13) from a front surface; and
a second holder (23, 23a) configured to hold the screen (13) from a back surface.

3. The image display apparatus (1) according to claim 2, wherein at least any one of the first holder (21) and the second holder (23, 23a) includes a contact portion (234a to 234c) contacting the screen (13).

4. The image display apparatus (1) according to any one of claims 1 to 3, wherein a material of the housing has a higher rigidity than a material of the screen (13).

5. The image display apparatus (1) according to claim 4, wherein the housing has a lower coefficient of linear expansion than the screen (13).

6. The image display apparatus (1) according to any one of claims 1 to 5, wherein the screen (13) comprises a microlens array.

7. The image display apparatus (1) according to any one of claims 1 to 6, wherein the optical deflector (11) includes a bi-axial MEMS mirror.

8. The image display apparatus (1) according to any one of claims 1 to 7, wherein
the laser beam includes a plurality of laser beams that differ in wavelength, and
the image display apparatus (1) further comprises an optical-path coupling member configured to couple optical paths of the plurality of laser beams emitted by the laser light source (10) into one optical path.

9. The image display apparatus (1) according to any one of claims 1 to 8, further comprising an enlarging optical system including the concave mirror (14) and configured to enlarge an image area on the screen (13) scanned using the optical deflector (11).

10. The image display apparatus (1) according to claim 9, further comprising the transparent reflective member (15) configured to transmit a part of the laser light incident on the image area enlarged by the enlarging optical system and reflect at least a part of the remainder.

## Patentansprüche

1. Bildanzeigevorrichtung (1), umfassend:
eine Lichtlaserquelle (10), die konfiguriert ist, um ein Laserlicht in Übereinstimmung mit einem Bild zu emittieren;
einen optischen Ablenker (11), der konfiguriert ist, um das Laserlicht, das durch die Laserlichtquelle (10) emittiert wird, abzulenken;
einen Bildschirm (13), der konfiguriert ist, um ein Zwischenbild in einem vorbestimmten Divergenzwinkel zu divergieren, um zu veranlassen, dass das Zwischenbild durch einen konkaven Spiegel (14) und ein gekrümmtes durchscheinendes Reflexionselement (15) reflektiert wird, wobei das Zwischenbild mit dem Laserlicht, das durch den optischen Ablenker (11) abgelenkt wird, auf den Bildschirm (13) zu malen; und **dadurch gekennzeichnet, dass**
ein Gehäuse einen gekrümmten Gehäuseraum zum Aufnehmen des Bildschirms (13) ausbildet, wobei
das Gehäuse den Bildschirm (13) in dem Gehäuseraum aufnimmt, um den Bildschirm (13) mit einer vorbestimmten Krümmung zu krümmen.

2. Bildanzeigevorrichtung (1) nach Anspruch 1, wobei das Gehäuse enthält:
einen ersten Halter (21), der konfiguriert ist, um den Bildschirm (13) von einer vorderen Oberfläche zu halten; und
einen zweiten Halter (23, 23a), der konfiguriert ist, um den Bildschirm (13) von einer hinteren Oberfläche zu halten.

3. Bildanzeigevorrichtung (1) nach Anspruch 2, wobei wenigstens einer des ersten Halters (21) und des zweiten Halters (23, 23a) einen Kontaktabschnitt (234a bis 234c) enthält, der den Bildschirm (13) kontaktiert.

4. Bildanzeigevorrichtung (1) nach einem der Ansprüche 1 bis 3, wobei ein Material des Gehäuses eine höhere Steifigkeit als ein Material des Bildschirms (13) aufweist.

5. Bildanzeigevorrichtung (1) nach Anspruch 4, wobei das Gehäuse einen niedrigeren Koeffizienten der linearen Ausdehnung als der Bildschirm (13) aufweist.

6. Bildanzeigevorrichtung (1) nach einem der Ansprüche 1 bis 5, wobei der Bildschirm (13) eine Mikrolinsen-Anordnung umfasst.

7. Bildanzeigevorrichtung (1) nach einem der Ansprüche 1 bis 6, wobei der optische Ablenker (11) einen bi-axialen MEMS-Spiegel enthält.

8. Bildanzeigevorrichtung (1) nach einem der Ansprüche 1 bis 7, wobei
der Laserstrahl eine Mehrzahl von Laserstrahlen enthält, die sich in der Wellenlänge unterscheiden, und
die Bildanzeigevorrichtung (1) ferner ein Kopplungselement für einen optischen Pfad umfasst, das konfiguriert ist, um optische Pfade der Mehrzahl von Laserstrahlen, die durch die Laserlichtquelle (10) emittiert werden, in einen optischen Pfad zu koppeln.

9. Bildanzeigevorrichtung (1) nach einem der Ansprüche 1 bis 8, ferner umfassend ein vergrößerndes optisches System, einschließlich des konkaven Spiegels (14) und konfiguriert, um eine Bildfläche auf dem Bildschirm (13), die unter Verwendung des optischen Ablenkers (11) abgetastet wird, zu vergrößern.

10. Bildanzeigevorrichtung (1) nach Anspruch 9, ferner umfassend das durchscheinende Reflexionselement (15) das konfiguriert ist, um einen Teil des Laserlichts, das auf die Bildfläche auftrifft, die durch das vergrößernde optische System vergrößert wird, zu übertragen und wenigstens einen Teil des Rests zu reflektieren.

## Revendications

1. Appareil d'affichage d'image (1) comprenant :
une source de lumière laser (10) configurée pour émettre une lumière laser conformément à une image;
un déflecteur optique (11) configuré pour dévier la lumière laser émise par la source de lumière laser (10) ;
un écran (13) configuré pour faire diverger une image intermédiaire à un angle de divergence prédéterminé, afin que l'image intermédiaire soit réfléchie par un miroir concave (14) et un élément réfléchissant transparent incurvé (15) pour former une image virtuelle, l'image intermédiaire étant dessinée sur l'écran (13) avec la lumière laser déviée par le déflecteur optique (11) ; et **caractérisé par**
un boîtier formant un espace de boîtier incurvé pour loger l'écran (13), dans lequel le boîtier loge l'écran (13) dans l'espace de boîtier pour courber l'écran (13) avec une courbure prédéterminée.

2. Appareil d'affichage d'image (1) selon la revendication 1, dans lequel le boîtier comprend :
un premier support (21) configuré pour maintenir l'écran (13) à partir d'une surface avant ; et
un second support (23, 23a) configuré pour maintenir l'écran (13) à partir d'une surface arrière.

3. Appareil d'affichage d'image (1) selon la revendication 2, dans lequel au moins l'un quelconque du premier support (21) et du second support (23, 23a) comprend une partie de contact (234a à 234c) en contact avec l'écran (13).

4. Appareil d'affichage d'image (1) selon l'une quelconque des revendications 1 à 3, dans lequel un matériau du boîtier a une rigidité plus élevée qu'un matériau de l'écran (13).

5. Appareil d'affichage d'image (1) selon la revendication 4, dans lequel le boîtier a un coefficient de dilatation linéaire plus faible que l'écran (13).

6. Appareil d'affichage d'image (1) selon l'une quelconque des revendications 1 à 5, dans lequel l'écran (13) comprend un réseau de microlentilles.

7. Appareil d'affichage d'image (1) selon l'une quelconque des revendications 1 à 6, dans lequel le déflecteur optique (11) comprend un miroir MEMS bi-axial.

8. Appareil d'affichage d'image (1) selon l'une quelconque des revendications 1 à 7, dans lequel
le faisceau laser comprend une pluralité de faisceaux laser qui diffèrent en longueur d'onde, et
l'appareil d'affichage d'image (1) comprend en outre un élément de couplage de chemin optique configuré pour coupler des chemins optiques de la pluralité de faisceaux laser émis par la source de lumière laser (10) en un seul chemin optique.

9. Appareil d'affichage d'image (1) selon l'une quelconque des revendications 1 à 8, comprenant en outre un système optique d'agrandissement comprenant le miroir concave (14) et configuré pour agrandir une zone d'image sur l'écran (13) balayée en utilisant le déflecteur optique (11).

10. Appareil d'affichage d'image (1) selon la revendication 9, comprenant en outre l'élément réfléchissant transparent (15) configuré pour transmettre une partie de la lumière laser incidente sur la zone d'image agrandie par le système optique d'agrandissement et réfléchir au moins une partie du reste.
